# EUROPÄISCHE PATENTSCHRIFT

(11) **EP 2 233 754 B1**
(45) Veröffentlichungstag und Bekanntmachung des Hinweises auf die Patenterteilung: **04.11.2015**
(21) Anmeldenummer: 10155751.0
(22) Anmeldetag: 08.03.2010
(51) Int. Cl.: F16B 15/08, F16B 27/00

(54) **Befestigungselemente-Magazinstreifen**
Attachment elements cartridge strip
Ruban de stockage d'éléments de fixation

(30) Priorität: 24.03.2009 DE 102009001790
(43) Veröffentlichungstag der Anmeldung: 29.09.2010
(73) Patentinhaber: HILTI Aktiengesellschaft, 9494 Schaan (LI)
(72) Erfinder: Miescher, Stefan, 9494, Schaan (LI)
(74) Vertreter: Hilti Aktiengesellschaft Corporate Intellectual Property

(56) Entgegenhaltungen:
- EP-A1- 0 336 089
- US-A- 5 984 096
- US-A1- 2004 042 875

## Beschreibung

Die vorliegende Erfindung betrifft einen Befestigungselemente-Magazinstreifen, der im Oberbegriff von Patentanspruch 1 genannten Art. Derartige Befestigungselemente-Magazinstreifen kommen z. B. in handgeführten Setzgeräten bzw. Eintreibgeräten zum Einsatz, mittels denen die an dem Befestigungselemente-Magazinstreifen magazinierten Befestigungselemente in ein Werkstück eingetrieben werden können.

Aus der US 2008/0121678 A1 ist ein Befestigungselemente-Magazinstreifen bekannt, bei dem Befestigungselemente an einem Trägerstreifen angeordnet sind, der aus mehreren miteinander verbundenen Trägersegmenten besteht. An jedem Trägersegment des Trägerstreifens sind Vorsprünge angeordnet, die senkrecht zu einer von dem Trägerstreifen aufgespannten Ebene zu beiden Seiten des Trägerstreifen abragen. Die Vorsprünge sind dabei in einer ersten Erstreckungsrichtung parallel zu einer Längsachse der Befestigungselemente grösser als in einer zweiten Erstreckungsrichtung, die senkrecht zur Längsachse der Befestigungselemente verläuft. Die Vorsprünge ermöglichen eine Zusatzfunktion bei der ein Gegenschieber einer Stelleinrichtung eines Setzgerätes an die Vorsprünge angreifen kann, so dass der Befestigungselemente-Magazinstreifen entgegen der Kraft eines Transportfederelementes versetzt werden kann.

Bei diesem bekannten Befestigungselemente-Magazinstreifen müssen zur Führung der mit den Vorsprüngen versehenen Trägersegmente in einer Bolzenführung eines Setzgerätes in der Bolzenführung spezielle Führungsnuten für die Vorsprünge vorgesehen werden.

Die Aufgabe der vorliegenden Erfindung liegt daher darin, einen Befestigungselemente-Magazinstreifen bereitzustellen, welcher eine Zusatzfunktion ermöglicht und bei welchem die genannten Nachteile vermieden sind.

Diese Aufgabe wird erfindungsgemäss durch die in Anspruch 1 genannten Massnahmen gelöst. Demnach sind die Vorsprünge in wenigstens einer Richtung quer zu ihrer Längserstreckung umbiegbar, vorzugsweise elastisch umbiegbar, ausgebildet, so dass die Vorsprünge im Bereich der Bolzenführung eines Eintreibgerätes bei einem Setzvorgang umklappen oder weggebogen werden können, ohne den Setzvorgang oder den Streifentransport zu behindern. Gesonderte Führungsnuten für die Vorsprünge an der Bolzenführung sind nicht mehr nötig.

Vorteilhaft sind die Vorsprünge an den Trägersegmenten angeordnet, wobei am Aussenumfang der Trägersegmente jeweils wenigstens eine Ausnehmung vorgesehen ist, in welche die Vorsprünge hineinklappbar sind. Wenn ein Trägersegment bei einem Eintreibvorgang vom Befestigungselemente-Magazinstreifen abgeschert wird und durch die Bolzenführung eines Eintreibgerätes geführt wird, können die Vorsprünge in die Ausnehmung einklappen und behindern die Bewegung des Trägersegments in der Bolzenführung nicht.

Von Vorteil ist es ferner, wenn die Länge der Vorsprünge dem 2- bis 8-fachen ihrer ersten Breite entspricht, wodurch die elastische Biegsamkeit, insbesondere bei einem Trägerstreifen aus Kunststoff, schon durch die Geometrie der Vorsprünge hervorgerufen wird.

Vorteilhaft sind an Ansatzstellen der Vorsprünge am Trägerstreifen elastische Scharniere ausgebildet, die für eine elastische Biegsamkeit sorgen und die technisch einfach (z. B. durch eine Materialverjüngung) zu erstellen sind.

Günstig ist es auch, wenn der radiale Überstand der Vorsprünge über dem Führungsdurchmesser wenigstens dem 0,15- bis 0,7-fachen des Führungsdurchmesser entspricht, wodurch zum einen eine sichere Führung an Führungsflächen des Magazins ermöglicht wird und zum anderen eine Zusatzfunktion, z. B. eine radial aussenliegende Angriffsfläche für eine Zahnung eines Transportrechens eines Magazins oder eine radial aussenliegende Angriffsfläche für einen Gegenschieber zum Transportschieber eines Magazins, ermöglicht wird.

Insbesondere für die Verwendung eines Befestigungselemente-Magazinstreifens in einem Magazin mit Rechentransport ist es von Vorteil, wenn die Vorsprünge an jeder Seite des Trägerstreifens jeweils in Paaren angeordnet sind.

Weiter vorteilhaft sind die Vorsprünge im Querschnitt senkrecht zu ihrer Längserstreckung isometrisch ausgebildet, so dass sie in wenigstens zwei Richtungen senkrecht bzw. quer zu ihrer Längserstreckung elastisch biegbar sind. Die isometrische Ausgestaltung des Querschnitts muss sich dabei nicht über die gesamte Länge der Vorsprünge erstrecken, sondern kann z. B. auch auf das Scharnier oder einen bestimmten Bereich beschränkt sein.

In den Zeichnungen ist die Erfindung in mehreren Ausführungsbeispielen dargestellt.

### Es zeigen:

- Fig. 1: einen erfindungsgemässen Befestigungselemente-Magazinstreifen in Seitenansicht,
- Fig. 2: ein Trägersegment mit darin aufgenommenem Befestigungselement in Ansicht in Richtung des Pfeils II aus Fig. 1,
- Fig. 3: ein Trägersegment mit darin aufgenommenem Befestigungselement in Ansicht in Richtung des Pfeils III aus Fig. 2,
- Fig. 4: ein Magazin mit einem darin befindlichen Befestigungselemente-Magazinstreifen nach den Figuren 1 bis 3 in einem ersten Zustand,
- Fig. 5: das Magazin aus Fig. 4 in einem zweiten Zustand,
- Fig. 6: einen Schnitt durch das Magazin entlang der Linie VI - VI aus Fig. 4,
- Fig. 7: einen Schnitt durch das Magazin analog zu Fig. 6, während eines Setzvorgangs,
- Fig. 8: einen weiteren Befestigungselemente-Magazinstreifen in einer Ansicht analog zu Fig. 2,
- Fig. 9: einen weiteren Befestigungselemente-Magazinstreifen in Seitenansicht,
- Fig. 10: den Befestigungselemente-Magazinstreifen in Ansicht in Richtung des Pfeils X aus Fig. 9,

- Fig. 11: ein Trägersegment mit darin aufgenommenem Befestigungselement in Ansicht in Richtung des Pfeils XI aus Fig. 9,
- Fig. 12: ein Magazin während des Einführens eines Befestigungselemente-Magazinstreifen nach den Figuren 9 bis 11 in das Magazin,
- Fig. 13: das Magazin aus Fig. 12 während einer ersten Bewegung eines Transportrechens,
- Fig. 14: das Magazin aus Fig. 12 während einer Transportbewegung des Transportrechens.

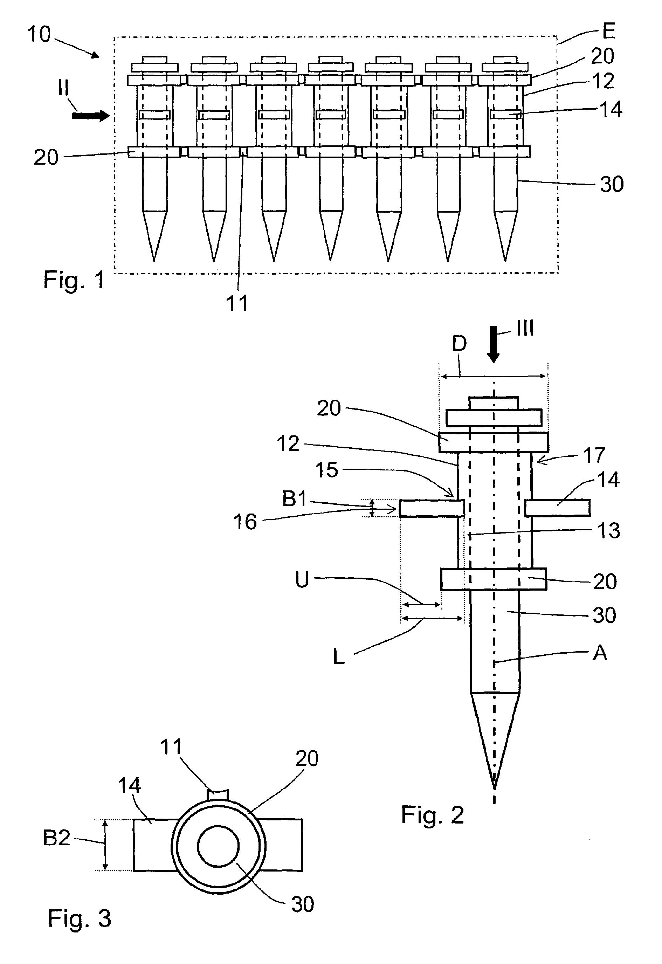

In den Figuren 1 bis 5 ist ein erfindungsgemässer Befestigungselemente-Magazinstreifen 10 wiedergegeben, der im gestreckten (nicht verbogenen Zustand) eine Ebene E aufspannt. Der Befestigungselemente-Magazinstreifen 10 weist einen Trägerstreifen 11 auf, der aus mehreren miteinander einteilig verbundenen hülsenförmigen Trägersegmenten 12 aufgebaut ist. Vorzugsweise sind diese Trägersegmente 12 aus einem Kunststoff gefertigt, wie z. B. aus Polyethylen (PE), Polypropylen (PP) oder Polystyrol (PS). Jedes der Trägersegmente 12 weist jeweils eine als Durchführöffnung 13 ausgebildete Aufnahme auf, in der jeweils ein Befestigungselement 30 gelagert ist.

Die Trägersegmente 12 verlaufen entlang einer Längsachse A und weisen an ihren beiden axialen Enden jeweils einen Führungsabschnitt 20 mit einem Führungsdurchmesser D auf. Zwischen den beiden Führungsabschnitten 20 ist am Aussenumfang der Trägersegmente 12 jeweils eine umlaufende Ausnehmung 17 vorgesehen.

Im Bereich der Ausnehmung 17 ragen zu beiden Seiten der Ebene E flügelartige Vorsprünge 14 von dem Trägerstreifen 11 bzw. den Trägersegmenten 12 ab. Die Vorsprünge 14 sind ungefähr mittig zwischen den beiden Führungsabschnitten 20 angeordnet und erstrecken sich dabei von ihrer Ansatzstelle 15 am Trägersegment 12 bis zu ihrem freien Ende 16 über eine Länge L. Senkrecht zu der Länge L und parallel zur Ebene E weisen die Vorsprünge ferner eine erste Breite B1 auf. Die Vorsprünge 14 überragen in radialer Richtung (bezogen auf die Längsachse A) den Führungsdurchmesser D um einen Überstand U, der vorzugsweise dem 0,15- bis 0,7-fachen des Führungsdurchmesser D entspricht

Die Vorsprünge 14 sind in wenigstens einer Richtung quer zu ihrer Längserstreckung mit der Länge L elastisch umbiegbar ausgebildet, was insbesondere über ihre Geometrie erreicht wird. Die Länge L der Vorsprünge 14 entspricht vorzugsweise dem 2- bis 8-fachen ihrer ersten Breite B1. Im dargestellten Beispiel entspricht die Länge L dem ca. 4-fachen ihrer ersten Breite B1. Eine zweite Breite B2, die in einer Richtung senkrecht zur Länge L und senkrecht zur ersten Breite B1 verläuft, ist grösser als die erste Breite B1, aber kleiner als die Länge L.

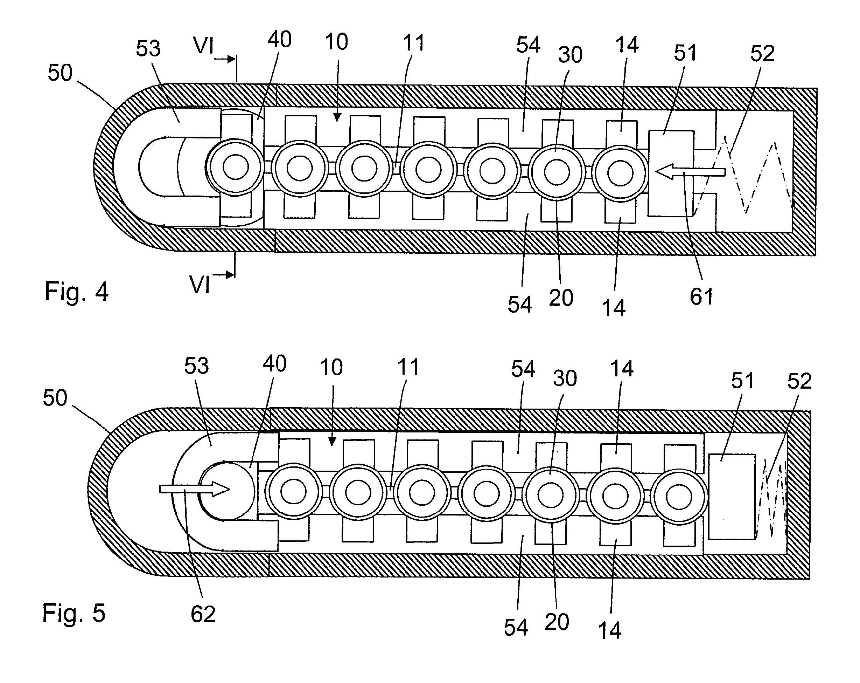

In den Figuren 4 und 5 ist der Befestigungselemente-Magazinstreifen 10 in einem Magazin 50 eines Eintreibgerätes angeordnet, mittels welchem die an dem Befestigungselemente-Magazinstreifen 10 konfektionierten Befestigungselemente (wie z. B. Nägel oder Bolzen) in ein Werkstück oder Bauteil eingetrieben werden können. Von dem Eintreibgerät sind in den Figuren 4 und 5 lediglich die Bolzenführung 40 sowie ein Teil des Treibkolbens 41 wiedergegeben. Zum Transport des Befestigungselemente-Magazinstreifen 10 in Transportrichtung 61 ist in dem Magazin 50 ein über eine Transportfeder 52 in Transportrichtung 61 beaufschlagter Schieber 51 vorgesehen. Über die flügelartigen Vorsprünge 14 ist der Befestigungselemente-Magazinstreifen 10 an Führungsschienen 54 des Magazins 50 sicher und verkantungsfrei geführt. Zusätzlich zur Führungsfunktion der Vorsprünge 14 dienen diese noch als Angriffsstellen für einen Gegenschieber 53. Wird das Eintreibgerät nicht mehr benutzt, so kann über den in einer der Transportrichtung 61 entgegengesetzten Richtung 62 bewegten Gegenschieber 53 (z. B. bei einem Abheben des Eintreibgerätes von dem Werkstück oder Bauteil) der Befestigungselemente-Magazinstreifen 10 so verschoben werden, dass das oberste Befestigungselement 30 aus der Axialprojektion der Bolzenführung 40 heraus bewegt wird (siehe insbesondere Fig. 5).

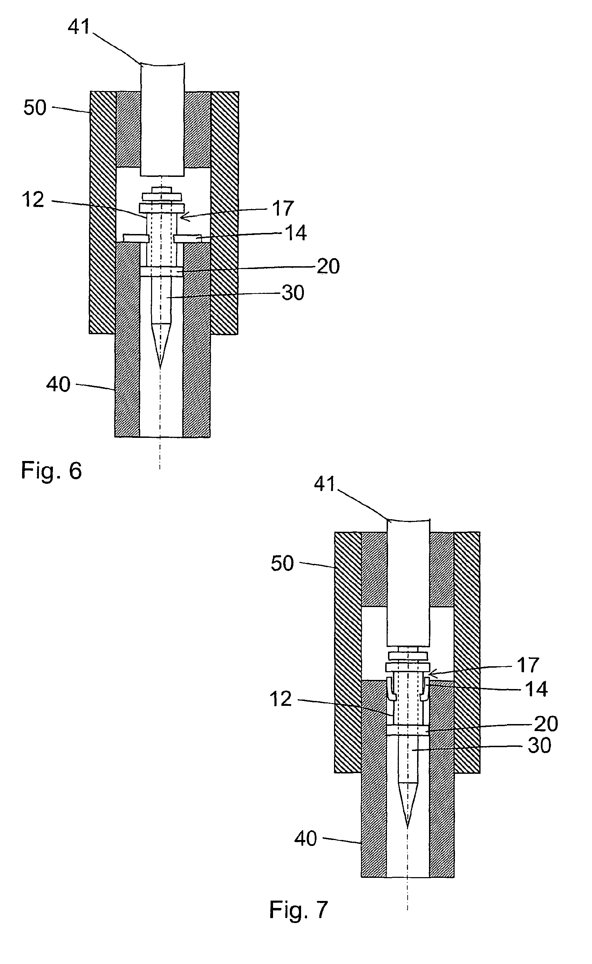

In den Figuren 6 und 7 sind von dem Eintreibgerät die Bolzenführung 40 sowie ein Teil des Treibkolbens 41 wiedergegeben. Ein erstes Befestigungselement 30 des Befestigungselemente-Magazinstreifens 10 befindet sich in Fig. 6 in setzbereiter Stellung in der Bolzenführung 40 bzw. in deren Axialprojektion. In Figur 7 wurde das Eintreibgerät betätigt, so dass der Eintreibkolben 41 sich in Setzrichtung bewegt und damit ein Befestigungselement 30 mit Trägersegment 12 vom Trägerstreifen 11 abschert. Die Vorsprünge 14 können dabei auf Grund ihrer Elastizität vollständig in die Ausnehmung 17 geklappt werden. Es verbleiben so keine störenden Überreste der Vorsprünge 14 im Magazin 50 bzw. in dem Raum vor der Bolzenführung 40.

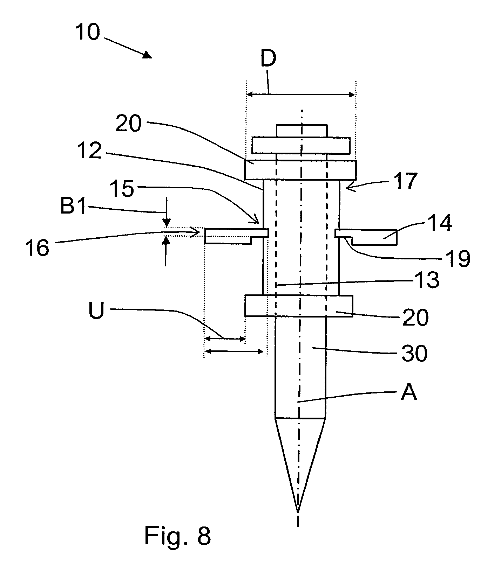

Der in Fig. 8 dargestellte Befestigungselemente-Magazinstreifen 10 unterscheidet sich von dem vorhergehend beschriebenen lediglich dadurch, dass die Vorsprünge 14 im Bereich der Ansatzstellen 15 jeweils ein Scharnier 19 in Form eines dickenreduzierten Bereiches des Vorsprungs 14 aufweisen. Die Länge L entspricht vorzugsweise dem 2- bis 8-fachen der ersten Breite B1 im Bereich des Scharniers 19. Im dargestellten Beispiel entspricht die Länge L dem ca. 7,5-fachen ihrer ersten Breite B1. Durch das Scharnier 19 wird die Elastizität bzw. Biegsamkeit der Vorsprünge 14 im Bereich der Ansatzstelle 15 erhöht. Bezüglich der weiteren Ausgestaltung des Befestigungselemente-Magazinstreifens 10 und hier nicht erwähnter Bezugszeichen wird vollumfänglich Bezug genommen auf die vorhergehende Beschreibung zu den Figuren 1 bis 7.

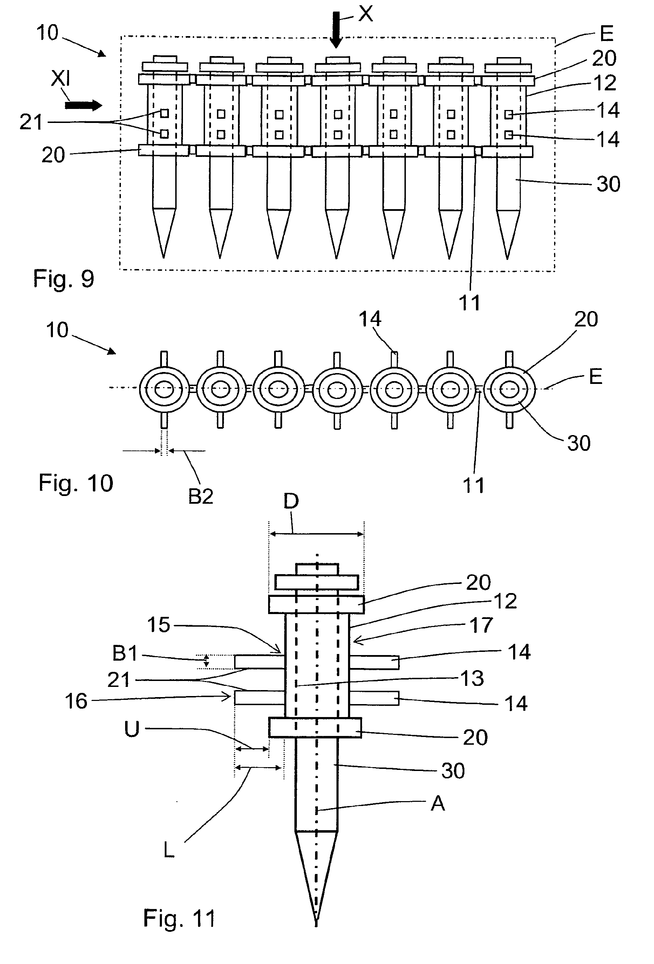

In den Figuren 9 bis 14 ist ein weiterer Befestigungselemente-Magazinstreifen 10 dargestellt, der sich dadurch von dem vorhergehenden unterscheidet, dass dort jeweils Paare 21 von Vorsprüngen 14 an den Trägersegmenten 12 zu beiden Seiten der Ebene E angeordnet sind. Die Vorsprünge 14 weisen im Querschnitt eine isometrische Geometrie auf, d. h. die erste Breite B1 ist im Wesentlichen gleich der zweiten Breite B2. Die Länge L der Vorsprünge 14 entspricht vorzugsweise dem 2- bis 8-fachen ihrer ersten Breite B1. Im dargestellten Beispiel entspricht die Länge L dem ca. 4,3-fachen ihrer ersten Breite B1. Jeweils einer der Vorsprünge 14 eines Paares 21 ist ungefähr mittig zwischen den beiden Führungsabschnitten 20 angeordnet, während der zweite Vorsprung 14 eines Paares 21 näher an einem in Setzrichtung liegenden Führungsabschnitt 20 liegt. Die Vorsprünge 14 erstrecken sich wiederum von ihrer Ansatzstelle 15 am Trägersegment 12 bis zu ihrem freien Ende 16 über eine Länge L.

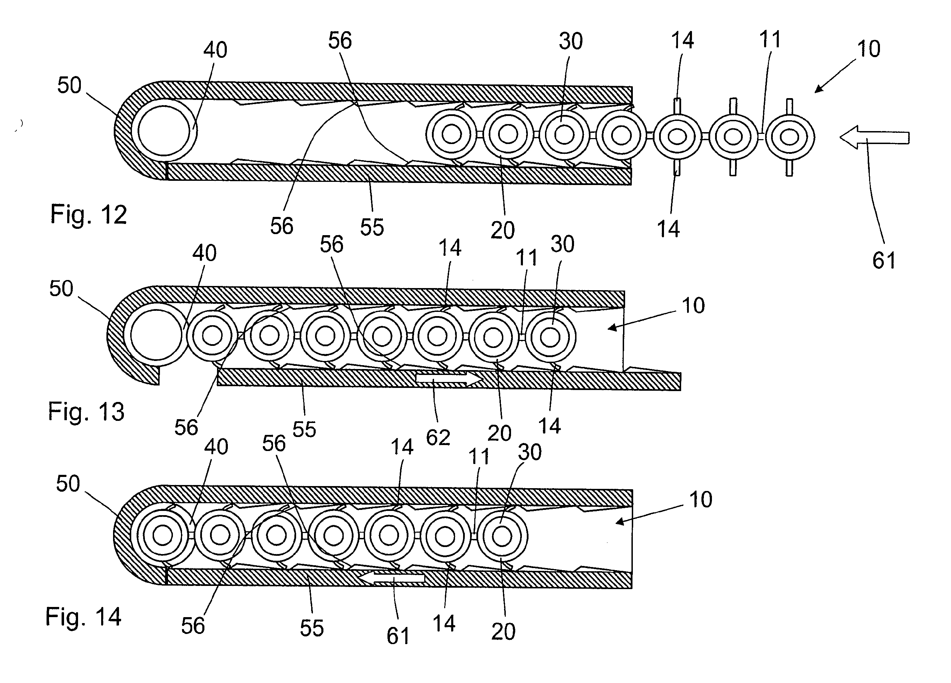

In Fig. 12 ist dargestellt, wie der Befestigungselemente-Magazinstreifen 10 in Transportrichtung 61 in ein Magazin 50 eingeschoben wird. Innen an den beiden Innenwänden des Magazins 50 ist jeweils eine Zahnung 56 angeordnet, die mit den Vorsprüngen 14 zum Transport des Befestigungselemente-Magazinstreifen 10 zusammenwirkt. Ein Wandabschnitt des Magazins 50 ist als Transportrechen 55 ausgebildet der sowohl in Transportrichtung 61 als auch in der genau entgegengesetzten Richtung 62 verschieblich ist.

In Fig. 13 befindet sich der Befestigungselemente-Magazinstreifen 10 direkt unterhalb der Bolzenführung 40 bzw. deren Axialprojektion. Der Transportrechen 55 wird in einer ersten Transportbewegung in Gegenrichtung 62 bewegt, wobei die Zahnung 56 des Transportrechens 55 auf Grund der Elastizität der Vorsprünge 14 an diesen vorbeibewegt werden kann, ohne den Befestigungselemente-Magazinstreifen 10 mitzubewegen. Der Transportrechen 55 muss dabei selbst nicht in der Richtung senkrecht zur Transportrichtung elastisch gelagert sein.

Bei einer Bewegung des Transportrechens 55 in Transportrichtung 61 wird Befestigungselemente-Magazinstreifen 10 in Transportrichtung 61 mitbewegt und ein erstes Befestigungselement 30 in die Bolzenführung 40 bzw. in Höhe deren Axialprojektion transportiert.

Bei einem Eintreibvorgang können die Vorsprünge 14 auf Grund ihrer Elastizität vollständig in die Ausnehmung 17 geklappt werden. Es verbleiben keine störenden Überreste der Vorsprünge 14 im Magazin 50 bzw. in dem Raum vor der Bolzenführung 40.

Bezüglich hier nicht erwähnter Bezugszeichen wird vollumfänglich Bezug genommen auf die vorhergehende Beschreibung zu den Figuren 1 bis 7.

## Patentansprüche

1. Befestigungselemente-Magazinstreifen mit einem über mehrere miteinander verbundene Trägersegmente (12) gebildeten und sich entlang einer Längsachse (A) erstreckenden Trägerstreifen (11) aus Kunststoff,
wobei die Trägersegmente (12) wenigstens einen Führungsabschnitt (20) mit einem Außendurchmesser (D) zur Führung jeweils eines Trägersegments (12) in einer Bolzenführung eines Setzgeräts sowie Durchführöffnungen (13) aufweisen, in denen jeweils ein Befestigungselement (30) gelagert ist,
wobei von dem Trägerstreifen (11) zu wenigstens einer Seite einer durch den Trägerstreifen (11) definierten Ebene (E) Vorsprünge (14) abragen, welche sich von ihrer Ansatzstelle (15) am Trägerstreifen (11) bis zu ihrem freien Ende (16) über eine Länge (L) erstrecken und senkrecht zu der Länge (L) eine erste Breite (B1) aufweisen,
und wobei die Vorsprünge (14) in, bezogen auf die Längsachse (A), radialer Richtung den Außendurchmesser (D) überragen,
**dadurch gekennzeichnet,**
**dass** die Vorsprünge (14) in wenigstens einer Richtung quer zu ihrer Längserstreckung umbiegbar ausgebildet sind.

2. Befestigungselemente-Magazinstreifen nach Anspruch 1, **dadurch gekennzeichnet, dass** die Vorsprünge (14) an den Trägersegmenten (12) angeordnet sind und am Aussenumfang der Trägersegmente (12) jeweils wenigstens eine Ausnehmung (17) vorgesehen ist, in welche die Vorsprünge (14) hineinklappbar sind.

3. Befestigungselemente-Magazinstreifen nach Anspruch 1 oder 2, **dadurch gekennzeichnet, dass** die Länge (L) der Vorsprünge (14) dem 2- bis 8-fachen ihrer ersten Breite (B1) entspricht.

4. Befestigungselemente-Magazinstreifen nach einem der Ansprüche 1 bis 3, **dadurch gekennzeichnet, dass** an Ansatzstellen (18) der Vorsprünge (14) am Trägerstreifen (11) elastische Scharniere (19) ausgebildet sind.

5. Befestigungselemente-Magazinstreifen nach einem der Ansprüche 1 bis 4, **dadurch gekennzeichnet, dass** der radiale Überstand (U) der Vorsprünge (14) über dem Führungsdurchmesser (D) wenigstens dem 0,15- bis 0,7-fachen des Führungsdurchmesser (D) entspricht.

6. Befestigungselemente-Magazinstreifen nach einem der Ansprüche 2 bis 5, **dadurch gekennzeichnet, dass** die Vorsprünge (14) an jeder Seite des Trägerstreifens (11) jeweils in Paaren (21) angeordnet sind.

7. Befestigungselemente-Magazinstreifen nach einem der Ansprüche 1 bis 6, **dadurch gekennzeichnet, dass** die Vorsprünge (14) im Querschnitt senkrecht zu ihrer Längserstreckung isometrisch ausgebildet sind.

## Claims

1. Attachment elements cartridge strip comprising a carrier strip (11) which is made of plastics material, is formed by a plurality of interconnected carrier segments (12) and extends along a longitudinal axis (A),
wherein the carrier segments (12) have at least one guide section (20) with an external diameter (D) for guiding a respective carrier segment (12) in a bolt guide of a setting tool, and through-openings (13) in each of which an attachment element (30) is stored,
wherein projections (14) extend from the carrier strip (11) on at least one side of a plane (E) defined by the carrier strip (11), which projections (14) extend from their starting point (15) on the carrier strip (11) to their free end (16) over a length (L) and have a first width (B1) perpendicular to the length (L),
and wherein the projections (14) extend beyond the external diameter (D) in a radial direction in relation to the longitudinal axis (A),
**characterised in that**
the projections (14) are designed to be bendable in at least one direction transversely to their longitudinal extension.

2. Attachment elements cartridge strip according to Claim 1, **characterised in that** the projections (14) are arranged on the carrier segments (12), and at least one recess (17) is provided on the external diameter of each of the carrier segments (12), into which recess (17) the projections (14) can be folded.

3. Attachment elements cartridge strip according to Claim 1 or 2, **characterised in that** the length (L) of the projections (14) is from 2 to 8 times greater than their first width (B1).

4. Attachment elements cartridge strip according to any one of Claims 1 to 3, **characterised in that** elastic hinges (19) are formed at starting points (18) of the projections (14) on the carrier strip (11).

5. Attachment elements cartridge strip according to any one of Claims 1 to 4, **characterised in that** the radial projecting length (U) of the projections (14) beyond the guide diameter (D) is at least from 0.15 to 0.7 times as great as the guide diameter (D).

6. Attachment elements cartridge strip according to any one of Claims 2 to 5, **characterised in that** the projections (14) are arranged in respective pairs (21) on each side of the carrier strip (11).

7. Attachment elements cartridge strip according to any one of Claims 1 to 6, **characterised in that** the projections (14), in cross section perpendicular to their longitudinal extension, are of isometric configuration.

## Revendications

1. Bande de magasin de chargement d'éléments de fixation comportant une bande de support (11) en matière plastique, formée sur plusieurs segments de support (12) reliés les uns aux autres, et s'étendant le long d'un axe longitudinal (A),
dans laquelle les segments de support (12) comportent au moins une partie de guidage (20) ayant un diamètre extérieur (D) pour guider respectivement un segment de support (12) dans un guide de boulon d'un appareil de pose, ainsi que des ouvertures traversantes (13), dans chacune desquelles est placé un élément de fixation (30),
dans laquelle des saillies (14) font saillie à partir de la bande de support (11) jusqu'à au moins un côté d'un plan (E) défini à travers la bande de support (11), lesquelles saillies s'étendent à partir de leur emplacement de départ (15) sur la bande de support (11) jusqu'à leur extrémité libre (16) sur une longueur (L) et ont une première largeur (B1) perpendiculairement à la longueur (L),
et dans laquelle les saillies (14) font saillie, par rapport à l'axe longitudinal (A), dans une direction radiale du diamètre extérieur (D),
**caractérisée en ce que**
les saillies (14) sont formées de manière à pouvoir être pliées dans au moins une direction transversale à leur extension longitudinale.

2. Bande de magasin de chargement d'éléments de fixation selon la revendication 1, **caractérisée en ce que** les saillies (14) sont agencées sur les segments de support (12) et au moins un évidement (17) est respectivement prévu sur la périphérie extérieure des segments de support (12), évidement dans lequel les saillies (14) peuvent être repliées.

3. Bande de magasin de chargement d'éléments de fixation selon la revendication 1 ou 2, **caractérisée en ce que** la longueur (L) des saillies (14) correspond à 2 à 8 fois leur première largeur (B1).

4. Bande de magasin de chargement d'éléments de fixation selon les revendications 1 à 3, **caractérisée en ce que** des charnières élastiques (19) sont formées sur la bande de support (11), aux emplacements de départ (18) des saillies (14).

5. Bande de magasin de chargement d'éléments de fixation selon l'une des revendications 1 à 4, **caractérisée en ce que** la protubérance radiale (U) des saillies (14) au-delà du diamètre de guidage (D) correspond au moins à 0,15 à 0,7 fois le diamètre de guidage (D).

6. Bande de magasin de chargement d'éléments de fixation selon l'une des revendications 2 à 5, **caractérisée en ce que** les saillies (14) sont respectivement agencées par paires (21), de chaque côté de la bande de support (11).

7. Bande de magasin de chargement d'éléments de fixation selon l'une des revendications 1 à 6, **caractérisée en ce que** les saillies (14) sont formées de manière isométrique en coupe transversale perpendiculairement à leur extension longitudinale.
